# EUROPEAN PATENT APPLICATION

(11) **EP 2 816 476 A1**
(43) Date of publication of application: **24.12.2014**
(21) Application number: 13186676.6
(22) Date of filing: 30.09.2013
(51) Int. Cl.: G06F 9/445

(54) **Methods for upgrading firmware and electronic devices using the same**

(30) Priority: 21.06.2013 TW 102122109
(71) Applicant: Wistron Neweb Corporation, Hsinchu 308 (TW)
(72) Inventor: Wu, Jia-Jian, Hsinchu 308 (TW)
(74) Representative: Ter Meer Steinmeister & Partner

(57) **Abstract**

An embodiment of a method for upgrading firmware, being executed by a processing unit, is introduced. Factory settings corresponding to a first firmware version with user configuration values corresponding to a second firmware version to generate combined user configuration values. System initiation for an electronic device is performed using the first firmware version according to the combined user configuration values.

## Description

### CROSS REFERENCE TO RELATED APPLICATIONS

This Application claims priority of Taiwan Patent Application No. 102122109, filed on June 21, 2013, the entirety of which is incorporated by reference herein.

### BACKGROUND

### Technical Field

The present invention relates to firmware upgrade, and in particular, relates to methods for upgrading firmware and electronic devices using the same.

### Description of the Related Art

Electronic device manufacturers typically add or improve functions by upgrading internally stored firmware. However, when upgrading the firmware, an electronic device needs to add new version parameters so as to adapt to the newly added functions. In addition, the user values being configured during the execution of the old firmware version need to be applied to the new firmware version for use. Thus, it is desirable to have methods for upgrading firmware and electronic devices using the same to not only add new version parameters but also preserve the previous user values.

### BRIEF SUMMARY

An embodiment of a method for upgrading firmware, executed by a processing unit, is disclosed. Factory settings corresponding to a first firmware version with user configuration values corresponding to a second firmware version to generate combined user configuration values. System initiation for an electronic device is performed using the first firmware version with reference to the combined user configuration values.

An embodiment of an electronic device for upgrading firmware is disclosed. The electronic device contains at least a memory and a processing unit. The memory is configured to store factory settings corresponding to a first firmware version, and user configuration values corresponding to a second firmware version. The processing unit, coupled to the memory, is configured to combine the factory settings with the user configuration values to generate combined user configuration values, and perform system initiation for the electronic device using the first firmware version with reference to the combined user configuration values.

The factory settings may be provided by a manufacturer of the electronic device and the user configuration values may be established through a configuration interface by a user. The first firmware version may represent a new firmware version and the second firmware version may represent an old firmware version. The aforementioned combining not only adds factory settings of new parameters associated with the new firmware version but also preserves the user configuration values, which was established when the old firmware version was run.

A detailed description is given in the following embodiments with reference to the accompanying drawings.

### BRIEF DESCRIPTION OF THE DRAWINGS

The present invention can be fully understood by reading the subsequent detailed description and examples with references made to the accompanying drawings, wherein:

FIG. 1 is a network architecture according to an embodiment of the invention;

FIG. 2 is a schematic diagram of data partitions of a storage unit according to an embodiment of the invention;

FIG. 3 is a flowchart illustrating a firmware update method according to an embodiment of the invention;

FIG. 4 is a flowchart illustrating a data upgrade method according to an embodiment of the invention;

FIG. 5 is a schematic diagram of a merge rule table according to an embodiment of the invention.

### DETAILED DESCRIPTION

The following description is of the best-contemplated mode of carrying out the invention. This description is made for the purpose of illustrating the general principles of the invention and should not be taken in a limiting sense. The scope of the invention is best determined by reference to the appended claims.

The present invention will be described with respect to particular embodiments and with reference to certain drawings, but the invention is not limited thereto and is only limited by the claims. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having the same name (but for use of the ordinal term) to distinguish the claim elements.

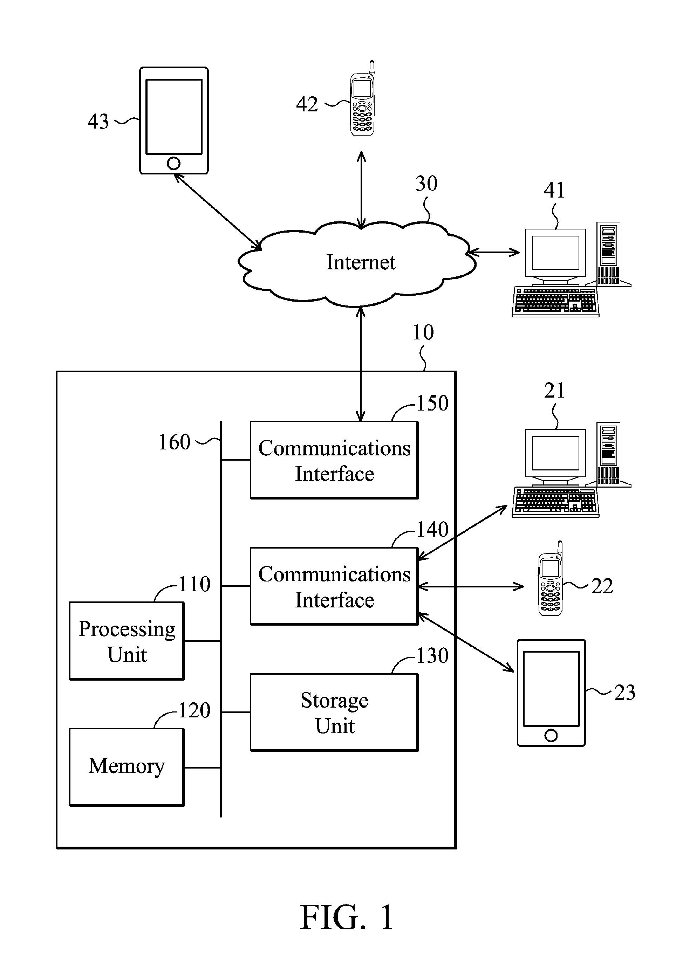

Several embodiments are introduced to describe that an electronic device uses methods for upgrading firmware to not only add new version parameters but also preserve the previous user values set in the execution of an old firmware version. The following introduces a router as an example to specify embodiments of the methods for upgrading firmware. FIG. 1 is a network architecture according to an embodiment of the invention. The network includes at least a router 10, configured to couple to the electronic devices 41, 42 and 43 through the Internet 30 via the communications interface 150 thereof, and use the communications interface 140 thereof to couple to the electronic devices 21, 22 and 23. The communications interface 140 may be a wired LAN (Local Area Network) interface to send and receive electrical, electromagnetic or optical signals that carry digital data streams representing various types of information. The communications interface 140 may be a wireless communications interface to send data to the electronic devices 21, 22 and 23, and receive data from the electronic devices via the 802.11x^{™} or the Bluetooth^{™} protocol. The communications interface 150 may be the aforementioned wired LAN interface or wireless communications interface. Also, the communications interface may connect to the Internet 30 to communicate with the electronic devices 41, 42 and 43 via a wideband connection device (not shown), such as a cable modem, a DSL (Digital Subscriber Line) modem, or the like.

The router 10 may include a bus 160 or other communication mechanism for communicating information across and among various parts of the router 10. The processing unit 310 can be implemented in numerous ways, such as with dedicated hardware, or with general-purpose hardware (e.g., a single process, multiple processors or graphics processing units capable of parallel computations, or others) that is programmed using microcode or software instructions to perform the functions recited hereinafter. The router may transmit packets from the Internet 30 to one of the electronic devices 21, 22 and 23, and transmit packets from one of the electronic devices 21, 22 and 23 to the Internet 30. The router 10 may implement QoS (quality of service) applications to provide data delivery with reference to the parameters negotiated with any of the electronic devices 21, 22 and 23, or any application executed therein.

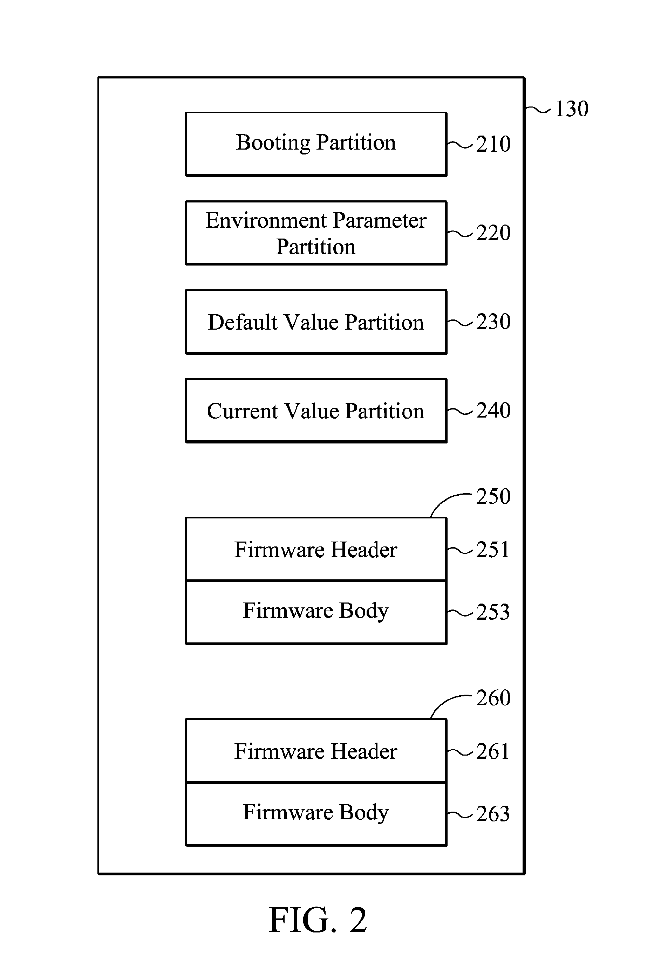

FIG. 2 is a schematic diagram of the data partitions of the storage unit 130 according to an embodiment of the invention. The storage unit 130 may be practiced in a physical region of a non-volatile memory, containing at least the booting partition 210, the environment parameter partition 220, the default value partition 230, the current value partition 240 and two firmware storage partitions 250 and 260. The booting partition 210 is used to store program codes of a boot-loader. The environment parameter partition 220 is used to store the requisite environment parameters, which are needed when the processing unit 110 loads and executes the boot-loader. The default value partition 230 is used to store factory settings associated with the current firmware version. The current value partition 240 is used to store user current configuration values. The factory settings are provided by the manufacturer of the router 10 while the current configuration values are established through a configuration interface by a user and stored in the current value partition 240. In addition, the allocated firmware storage partitions 250 and 260 are used to store different firmware versions alternately, which may be obtained from an external storage device or the Internet. For example, since the currently used firmware is stored in the firmware storage partition 250, the downloaded version is stored in the firmware storage partition 260 without overwriting the data of the firmware storage partition 250. Moreover, the next firmware version, which is newer than the currently downloaded version, will be stored in the firmware storage partition 250.

Several examples are disclosed to describe the data stored in the default value partition 230. The default value partition 230 may store a preset pair of an administrator account and a password, and a variety of factory settings for network management, such as various items of firewall settings, WAN (Wide Area Network) settings, LAN settings, wireless network settings and system settings. The firewall settings may contain an item for configuring whether the router 10 runs in the NAT (network address transition) mode or the bridge mode (also referred to as an item of the router running mode). The router 10 running in the NAT mode modifies source addresses of passed-through packets with public addresses, which are received from any of the electronic devices 21, 22 and 23 and to be transmitted to the Internet 30, and stores the NAT-related information, such as records each containing one of the private addresses of the electronic devices 21, 22 and 23, a source port, a destination address, a destination port and the allocated public address. After that, the router 10 receives packets from the Internet 30, refers to the stored NAT-related information and modifies the public addresses, which are stored in the destination address fields of the received packets, with the private addresses accordingly, so that the designated electronic devices 21, 22 and 23 can receive the packets. Note that, the public addresses are network addresses recognized by any node presented in the Internet 30 while the private addresses are network addresses only recognized by the electronic devices presented in the LAN, such as the router 10, the electronic devices 21, 22 and 23, etc., where the available quantity of public addresses is typically fewer than the quantity of the electronic devices presented in the LAN. The router 10 running in the bridge mode allocates each of the electronic devices 21, 22 and 23 a public address, so that the packets from the Internet 30 and the electronic devices 21, 22 and 23 are directly passed through without any address transition. In some embodiments, the factory setting indicating which mode the router 10 runs suggests the NAT mode. The WAN settings may contain the following items, such as a MAC (Media Access Control) address of the router 10 and a preset connection type to the Internet, such as one of the static IP (Internet Protocol) address and the dynamic IP address. Note that, after the firmware is successfully upgraded, the router 10 may have more network service functions and the default value partition 230 therefore stores factory settings of newly added items associated with the new functions.

The current value partition 240 may store the appended pairs of a user account and a password, and a wide range of user configuration values for network management, which are set by users, and parameter values for upgrading firmware. The router 10 may further provide a user interface which facilitates in the editing of the aforementioned data by users. Several examples are introduced to describe the data stored in the current value partition 240. The current value partition 240 may store multiple firewall configuration records appended by users to suggest the blocking of incoming and outgoing data associated with particular IP addresses and/or port numbers. The current value partition 240 may store user configuration values of the WAN setting items, such as the IP address of the router 10 assigned by the ISP (Internet Service Provider), the subnet mask, the default gateway, and the primary and secondary DNS (Domain Name Server). The WAN setting items may further contain sub items associated with the Internet connection type selected by a user, such as the static IP address and the dynamic IP address. The current value partition 240 may store configuration values of LAN setting items set by users, such as the router address of the LAN and the name of the router 10. The current value partition 240 may store configuration values of wireless network setting items set by users, such as the SSID (Service Set Identification), the encryption method, and the private key, etc. The current value partition 240 may store configuration values of system setting items set by users, such as the time zone, the language, and the file path of the debug log, etc. The current value partition 240 may further store a merge flag which indicates whether a data-renew procedure is needed to be performed. The merge flag is set to "True" after a new firmware version is successfully downloaded and stored in the firmware storage partition 250 or 260, so as to trigger the data-renew procedure subsequent to the firmware upgrade. Note that, the stored items of the current value partition 240 are diverse and numerous, typically more than a few thousand. Accordingly, users need much time to reconfigure the user values if the currently stored user configuration data is lost after the firmware upgrade.

As to the firmware storage partitions 250 and 260, the firmware code and the related data files are stored in the firmware body partition 253 or 263 while firmware profile data is stored in the firmware header partition 251 or 261. The firmware header partitions 251 and 261 store firmware version information associated with the firmware code stored in the firmware body partitions 253 and 263, respectively. The processing unit 110 may inspect the firmware version information recorded in the firmware header partition 251 and 261 to determine whether the firmware version used by the router 10 is out of date and needs to be upgraded. After a firmware upgrade is successfully performed, the environment parameter partition 220 stores information which indicates the location of the currently used firmware among the firmware storage partitions 230 and 240.

The embodiments of the invention describe the following technical features of combining multiple user configuration values corresponding to an old firmware version with multiple factory settings corresponding to a new firmware version to generate combined user configuration values. After that, an electronic device, such as the router 10, performs system initiation using the new firmware version and the combined user configuration values. The aforementioned combining not only adds factory settings of new parameters associated with the new firmware version but also preserves the user configuration values, which was established when the old firmware version was run.

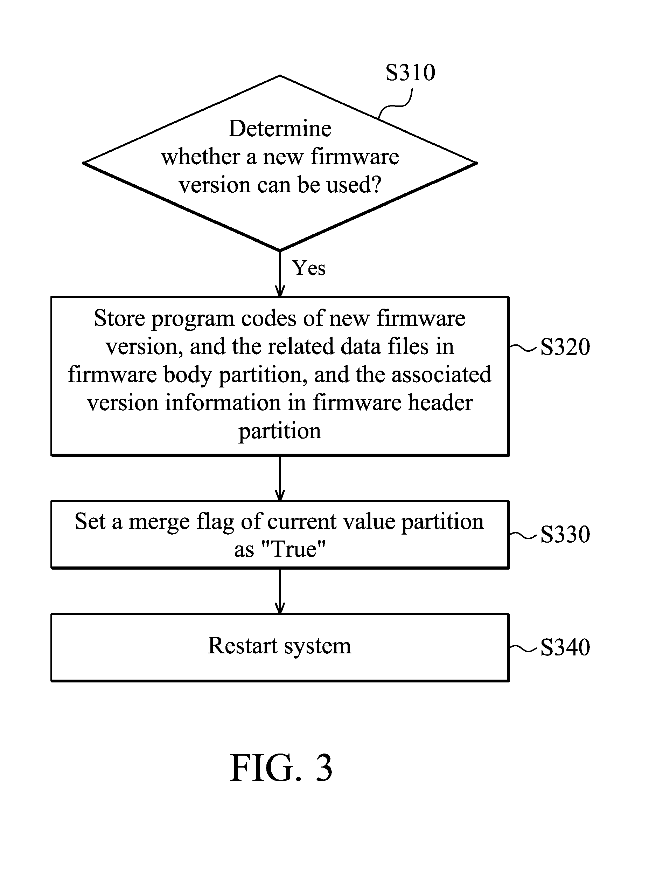

FIG. 3 is a flowchart illustrating a firmware update method according to an embodiment of the invention. The processing unit 110 realizes the following process steps when loading and executing program codes for firmware upgrade. It is first determined whether a new firmware version can be used (step S310). The processing unit 110, specifically, may inspect the version information of a downloadable firmware and determine if the latest version information stored in the firmware header partitions 251 and 261 is older than the inspected version information of the downloadable firmware. If so, the processing unit 110 stores program codes of new firmware version, and the related data files in the firmware body partition 253 or 263, and the associated version information in the firmware header partition 251 or 253 (step S320). The processing unit 110, specifically, may inspect the recorded indication information of the environment parameter partition 220 to know the location of the currently used firmware among the firmware storage partitions 250 and 260, and store the program codes of new firmware version, the related data files, and the associated version information in the other partition, which does not have the currently used firmware. The program codes of new firmware version, the related data files, and the associated version information may be read from a storage device, such as a portable hard drive, an optical disk, and a portable mass storage, etc., or downloaded by a node presented in the Internet 30. After the storage of the new firmware version, the processing unit 110 sets the merge flag of the current value partition 240 as "True" (step S330), and restarts the system (step S340). It will be appreciated that in an alternative embodiment of the invention, the merge flag is stored in another location of the storage unit 130.

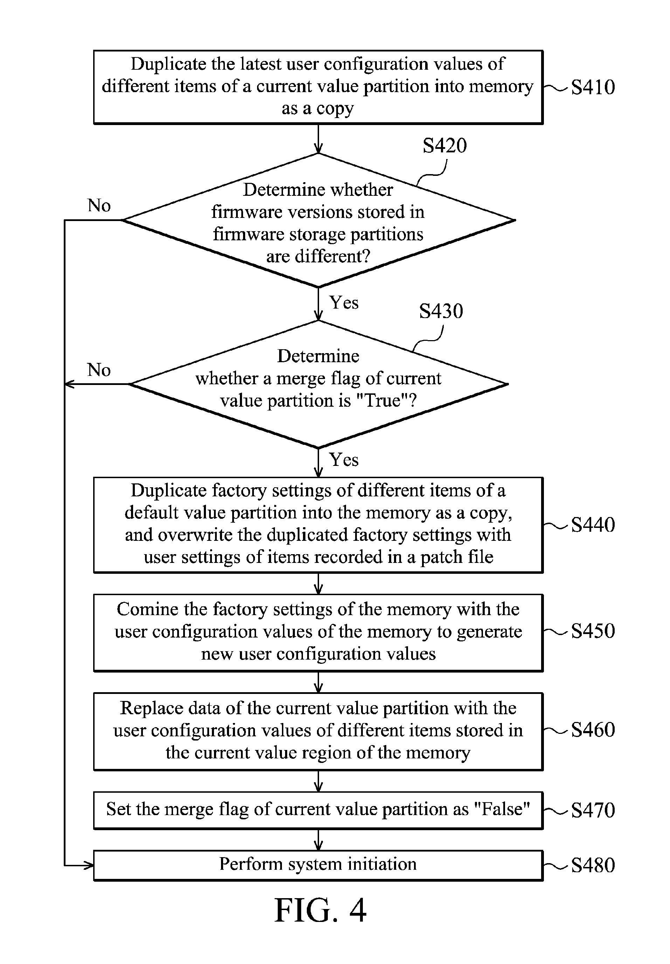

FIG. 4 is a flowchart illustrating a data upgrade method according to an embodiment of the invention. After the system is restarted (as shown in step S340), the processing unit 110 loads and executes program codes of the boot-loader of the booting partition 210 to realize the following steps. Note that, the boot-loader is the first program which is executed each time the router 10 or the system is started or restarted so as to initiate the hardware and software environment of the router 10. The processing unit 110 first duplicates the latest user configuration values of different items of the current value partition 240 into the memory 120 as a copy (step S410). Two decisions are subsequently made. One is to determine whether the firmware versions stored in the firmware storage partitions 250 and 260 are different (step S420), and the other is to determine whether the merge flag of the current value partition 240 is "True" (step S430). If the two conditions are met, steps S440 to S470 regarding the data-renew procedure subsequent to the firmware upgrade, are executed; otherwise, the system initiation is performed according to the user configuration values of the memory 120 (step S480). Step S420 is executed in efforts to prevent the performance of an unnecessary data-renew procedure when a user updates the same firmware version (instead of upgrading firmware version) repeatedly to fix errors. It will be appreciated that in an alternative embodiment of the invention, steps S420 and S430 may be swapped, or the step S420 may be omitted, and the invention should not be limited thereto.

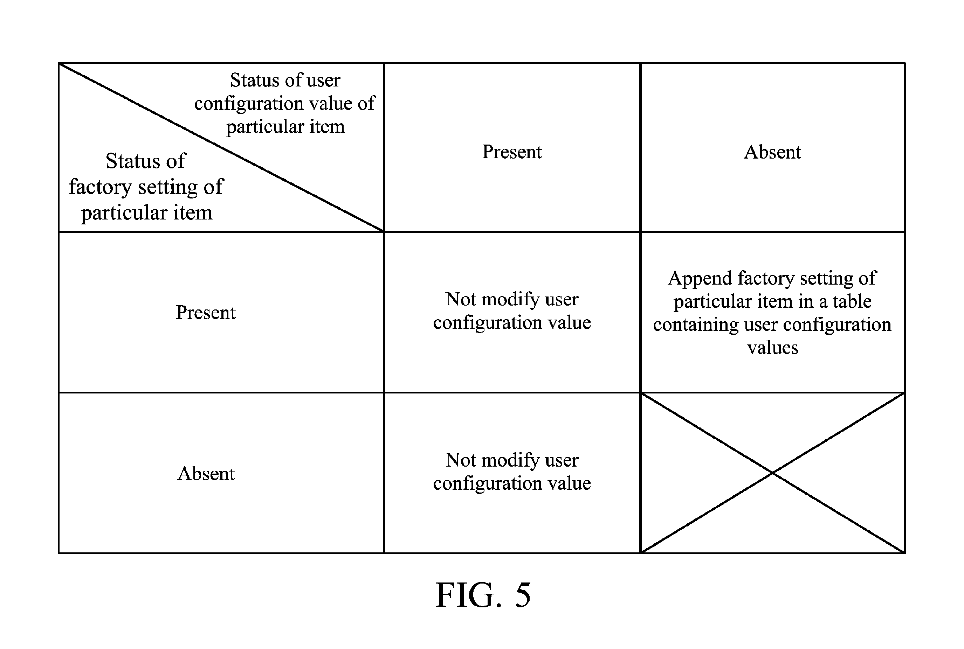

For the data-renew procedure subsequent to the firmware upgrade, the processing unit 110 first duplicates factory settings of different items of the default value partition 230 into the memory 120 as a copy, which are associated with the new firmware version, and overwrites the duplicated factory settings with the user settings of the items recorded in a patch file, which is provided by a user (step S440). For example, if the patch file contains a user setting which indicates that the router 10 runs in the bridge mode, the user setting overwrites the factory setting of the same item of the memory 120, regardless of which router running mode the factory setting indicates. The user settings within the patch file can be considered as user-defined factory settings. Meanwhile, the memory 120 includes, but is not limited to, two regions: one is referred to as a default value region for storing the modified factory setting; and the other is referred to as a current value region for storing the duplicated user configuration values copied from the current value partition 240 of the storage unit 130 (described in step S410). Although the embodiment has been described by having specific features, such as importing a patch file, it is noted that these are merely the preferred features, and the invention is equally applicable to the data-renew procedure directly using the duplicated factory settings without any modification by importing a patch file. Subsequently, the factory settings of the memory 120 are combined with the user configuration values of the memory 120 to generate new user configuration values (step S450). The factory settings and the user configuration values of all items may be organized into one or more table(s) of a database. It should be understood that the factory settings of the memory 120 are associated with newly downloaded firmware version and the user configuration values of the memory 120 are set by users operating in the environment of the old firmware version. FIG. 5 is a schematic diagram of a merge rule table according to an embodiment of the invention. The processing unit 110, specifically, for each item of the default value region of the memory 120, checks if the same item can be found in the current value region of the memory 120. If so, the factory setting of the same item is omitted, that is, the user configuration value of the same item of the current value region will not be overwritten by any factory setting; otherwise, a record containing the factory setting of this item is appended to a corresponding table of the current value region of the memory 120. For example, when the default value region and the current value region both have values for the router running mode, the processing unit 110 does not overwrite the user configuration value of the router running mode of the current value region. When the default value region has the factory setting of the router running mode but the current value region does not have any user configuration value of the router running mode, the processing unit 110 appends a record containing the router running mode with the corresponding factory setting in the table of the current value region. The step may use object methods to access and compare the factory settings and the user configuration values of particular items within the table(s), instead of the conventional line-by-line comparison. The aforementioned combination suggests a manner of user configuration value first to avoid overwriting immense user configuration values which had established by users for a great deal of time. Data of the current value partition 240 is replaced with the user configuration values of different items stored in the current value region of the memory 120 (step S460), and the merge flag of the current value partition 240 of the storage unit 130 is set to "False" to represent the completion of the data-renew procedure (step S470). Thereafter, the processing unit 110 performs system initiation using the newly downloaded firmware version according to the combined user configuration values of the memory 120 (step S480).

Although the embodiment has been described by having specific elements in FIG. 1 and FIG. 2, it is noted that additional elements may be included to achieve better performance without departing from the spirit of the invention. While the process flows described in FIG. 3 and FIG. 4 each include a number of operations that appear to occur in a specific order, it should be apparent that these processes can include more or fewer operations, which can be executed serially or in parallel (e.g., using parallel processors or a multi-threading environment).

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A method for upgrading firmware, executed by a processing unit, comprising:
combining a plurality of factory settings corresponding to a first firmware version with a plurality of user configuration values corresponding to a second firmware version to generate a plurality of combined user configuration values; and
performing system initiation for an electronic device using said first firmware version according to said combined user configuration values.

2. The method of claim 1, further comprising storing said combined user configuration values in a storage unit.

3. The method of claim 1 or 2, wherein said factory settings are provided by a manufacturer of said electronic device and said user configuration values are established through a configuration interface during operation of the second firmware version.

4. The method as claimed in any one of the preceding claims, further comprising reading said factory settings from a storage unit.

5. The method as claimed in any one of the preceding claims, further comprising:
reading a plurality of original factory settings from a storage unit;
obtaining a patch file; and
overwriting at least one of said original factor settings each with a user setting of the same item to generate said factory settings.

6. The method as claimed in any one of the preceding claims, wherein said electronic device is a router.

7. The method as claimed in any one of the preceding claims, before said combining step, further comprising:
determining whether a merge flag is "True"; and
if so, executing said combining step and said performing steps,
wherein said merge flag of "True" indicates that said first firmware version has been successfully downloaded.

8. The method as claimed in any one of the preceding claims, before said combining step, further comprising:
determining whether a merge flag is "True" and said first firmware version and said second firmware version are different; and
if so, executing said combining step and said performing steps,
wherein said merge flag of "True" indicates that said first firmware version has been successfully downloaded.

9. The method as claimed in any one of the preceding claims, wherein said first firmware version represents a new firmware version and said second firmware version represents an old firmware version.

10. The method as claimed in any one of the preceding claims, wherein said steps completes when said processing unit executes a boot-loader, and said boot-loader is a first program which is executed each time the electronic device is started or restarted.

11. The method as claimed in any one of the preceding claims, wherein said combining step further comprises combining said factory settings with said user configuration values in a manner of user configuration value first.

12. An electronic device for upgrading firmware, comprising:
a memory, configured to store a plurality of factory settings corresponding to a first firmware version, and a plurality of user configuration values corresponding to a second firmware version; and
a processing unit, coupled to said memory and configured to combine said factory settings with said user configuration values to generate a plurality of combined user configuration values and perform system initiation for said electronic device using said first firmware version according to said combined user configuration values,
wherein said user configuration values and said factory setting are organized in at least one table of a database, and said user configuration values and said factory settings are accessed by an object method.

13. The electronic device of claim 12, further comprising a storage unit, wherein said processing unit is configured to store said combined user configuration values in said storage unit.

14. The electronic device of claim 12 or 13, wherein said processing unit is configured to determine whether a merge flag is "True", and, if so, execute said combining operation and said performing operation, and said merge flag of "True" indicates that said first firmware version has been successfully downloaded.

15. The electronic device as claimed in any one of the claims 12, 13 or 14, wherein said processing unit is configured to determine whether a merge flag is "True" and said first firmware version and said second firmware version are different, and, if so, execute said combining operation and said performing operation, and said merge flag of "True" indicates that said first firmware version has been successfully downloaded, and wherein said first firmware version represents a new firmware version and said second firmware version represents an old firmware version.
